(19) **Europäisches Patentamt / European Patent Office / Office européen des brevets**

(11) **EP 3 615 197 B1**

(12) # EUROPEAN PATENT SPECIFICATION

(45) Date of publication and mention of the grant of the patent:
**17.04.2024   Bulletin 2024/16**

(21) Application number: **18813588.3**

(22) Date of filing: **04.06.2018**

(51) International Patent Classification (IPC):
**C01B 32/00** (2017.01)      **B33Y 70/00** (2020.01)
**C09D 11/03** (2014.01)      **C09D 11/103** (2014.01)
**H01G 11/32** (2013.01)      **H01G 11/86** (2013.01)
**C08G 8/22** (2006.01)      **B33Y 70/10** (2020.01)

(52) Cooperative Patent Classification (CPC):
**B33Y 70/00; B33Y 70/10; C01B 32/00; C08G 8/22; C09D 11/03; C09D 11/103; H01G 11/32; H01G 11/86;** B29C 64/106; B29K 2061/04; B29K 2401/00; B29K 2509/02; B29L 2031/3406; B33Y 10/00; B33Y 80/00

(86) International application number:
**PCT/US2018/035835**

(87) International publication number:
**WO 2018/226576 (13.12.2018 Gazette 2018/50)**

(54) **SYSTEM AND METHOD FOR FORMING ACTIVATED CARBON AEROGELS AND PERFORMING 3D PRINTING**

SYSTEM UND VERFAHREN ZUR BILDUNG VON AKTIVKOHLE-AEROGELEN UND ZUM 3D-DRUCKEN

SYSTÈME ET PROCÉDÉ POUR FORMER DES AÉROGELS DE CHARBON ACTIF ET RÉALISER UNE IMPRESSION 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **05.06.2017   US 201715613630**

(43) Date of publication of application:
**04.03.2020   Bulletin 2020/10**

(73) Proprietor: **Lawrence Livermore National Security, LLC**
**Livermore CA 94550-9234 (US)**

(72) Inventors:
• **CHANDRASEKARAN, Swetha**
  **Livermore, California 94550 (US)**
• **BAUMANN, Theodore F.**
  **Livermore, California 94550 (US)**
• **WORSLEY, Marcus A.**
  **Livermore, California 94550 (US)**

(74) Representative: **Wunderlich & Heim**
**Patentanwälte**
**PartG mbB**
**Irmgardstraße 3**
**81479 München (DE)**

(56) References cited:
**CN-A- 106 543 687     US-A1- 2011 303 880**

• **CHENG ZHU ET AL: "Supercapacitors Based on Three-Dimensional Hierarchical Graphene Aerogels with Periodic Macropores", NANO LETTERS, vol. 16, no. 6, 20 January 2016 (2016-01-20), pages 3448-3456, XP055422911, US ISSN: 1530-6984, DOI: 10.1021/acs.nanolett.5b04965 -& CHENG ZHU ET AL: "Supporting Information - Supercapacitors based on 3D hierarchical graphene aerogels with periodic macropores", NANO LETTERS, vol. 16, no. 6, 20 January 2016 (2016-01-20), pages 1-11, XP055686012, US ISSN: 1530-6984, DOI: 10.1021/acs.nanolett.5b04965**

- CHENG ZHU ET AL: "Highly compressible 3D periodic graphene aerogel microlattices", NATURE COMMUNICATIONS, vol. 6, no. 1, 22 April 2015 (2015-04-22), pages 1-8, XP055573794, DOI: 10.1038/ncomms7962
- SMAY J E ET AL: "DIRECTED COLLOIDAL ASSEMBLY OF 3D PERIODIC STRUCTURES", ADVANCED MATERIALS, WILEY-VCH GERMANY, DE, vol. 14, no. 18, 16 September 2002 (2002-09-16), pages 1279-1283, XP001131363, ISSN: 0935-9648, DOI: 10.1002/1521-4095(20020916)14:18<1279::AID-ADMA1279>3.0.CO;2-A
- ZHU, CHENG et al.: "Highly compressible 3D periodic graphene aerogel microlattices", Nature Communications, vol. 6, no. 6962, 22 April 2015 (2015-04-22), pages 1-8, XP055573794,
- MOUSSAOUI, REBAH et al.: "Sol-gel synthesis of microporous carbon using resorcinol and formaldehyde", Journal of Chemical Research, vol. 40, no. 4, 27 April 2016 (2016-04-27) , pages 209-212, XP055573804,
- DESPETIS, F. et al.: "Effect of aging on mechanical properties of resorcinol-formaldehyde gels", Journal of Sol-Gel Science and Technology, vol. 19, no. 1-3, 2000, pages 829-831, XP019212762,
- REY-RAAP, NATALIA et al.: "Aqueous and organic inks of carbon xerogels as models for studying the role of porosity in lithium-ion battery electrodes", Materials and Design, vol. 109, 14 July 2016 (2016-07-14), pages 282-288, XP029728518,
- ARABY, SHERIF et al.: "Aerogels based on carbon nanomaterials", Journal of Materials Science, vol. 51, no. 20, 11 July 2016 (2016-07-11) , pages 9157-9189, XP036011753,

**Description**

FIELD

The present disclosure relates to systems and methods for three dimensional printing, and more particularly to systems and methods for fabricating carbon aerogels through a direct ink writing process.

BACKGROUND

This section provides background information related to the present disclosure which is not necessarily prior art.

Carbon aerogels are porous solids with interconnected carbon particles and so they exhibit high surface area and good electrical conductivity. Activated carbon aerogels are useful electrode materials for applications such as capacitive deionization, flow batteries, supercapacitors (or electric double-layer capacitors), and others. For example, interest in capacitive deionization systems, and making such systems more efficient, is growing in part because of growing interest in the use of deionization systems in desalination applications to remove salt from salt water. However, optimizing electrode design, for example the pore geometries of the electrode material to achieve improved efficiencies, still remains a challenge.

Additional information on the present state of the art involving three dimensional printing of aerogels may be found at the following: High surface area carbon aerogel monoliths with hierarchical porosity - Journal of Non-Crystalline Solids - 354 (29), 2008, Proceedings of the National Academy of Sciences - 111 (7), 2014, 3513-3515; Capacitive desalination with flow-through electrode - Energy and Environmental Science - 5 (11), 2012, 9511-9519; Highly compressible 3D periodic graphene aerogel micro-lattices - Nature Communications - 6 (6962), 22 April 2015, pages 1-8, XP055573794, DOI: 10.1038/ncomms7962; T. Baumann et al., reported a synthetically tailored high surface area (3000 $m2/g$) carbon aerogels with bimodal porosity which can be used as electrodes for electrochemical devices; M. Stadermann et al., described a model capacitive desalination (CD) cell which employed activated carbon aerogels as electrodes, with the efficiency of the cell being four times higher than a typical CD cell; Cheng et al., employed direct ink writing technique to prepare graphene aerogels with defined geometries.

3-D printing inks thickened with graphene oxide have also been made containing base catalyzed resorcinol-formaldehyde resins. Drawbacks from using such inks have been identified in the current work and represent further challenges in producing carbon aerogels downstream from the 3-D parts printed using the ink.

Cheng Zhu et al: "Supercapacitors Based on Three-Dimensional Hierarchical Graphene Aerogels with Periodic Macropores", NANO LETTERS, vol. 16, no. 6, 20 January 2016 (2016-01-20), pages 3448-3456, XP055422911, US, ISSN: 1530-6984, DOI: 10.1021/acs.nanolett.5b04965 and Cheng Zhu et al.: "Supporting Information - Supercapacitors based on 3D hierarchical graphene aerogels with periodic macropores" NANO LETTERS, vol. 16, no. 6, 20 January 2016 (2016-01-20), pages 1-11, XP055686012, US, ISSN: 1530-6984, DOI: 10.1021/acs.nonolett.5b04965 further relates to additional details for producing super capacitors.

Additional information can also be found in US 2011/0303880 A1.

SUMMARY

This section provides a general summary of the disclosure, and is not a comprehensive disclosure of its full scope or all of its features.

Carbon aerogels and electrodes fabricated from them, as well as methods for making them, are disclosed. In various embodiments, they overcome draw backs present in prior aerogels. In some aspects, the carbon aerogels have higher surface area or other superior properties. At the same time, challenges are addressed that arise in a 3-D printing step that is a precursor in forming the inventive carbon aerogels.

Generally, the method of making the carbon aerogel involves the steps of 3-D printing an ink to make a printed part, removing the solvent from the printed part, and carbonizing the printed part (with the solvent removed) to make the aerogel. The ink is based on a solution of a resorcinol-formaldehyde resin (RF resin), water, and an organic thickener. Advantageously, the RF resin contains an acid catalyst, which tends to result in the synthesis of carbon aerogels with higher surface areas than those produced from methods involving an initial step of 3-D printing an ink composition containing a base catalyzed resin.

The current teachings also provide a way of overcoming a challenge arising from the use of an acid catalyst for the resorcinol-formaldehyde reaction. While using an acid catalyst tends to improve the surface area of the downstream carbon aerogels, using the acid catalyst along with a conventional ink thickener like graphene oxide (GO) leads to ink compositions that increase quickly in viscosity, sometimes to a level that makes it difficult to carry out the 3-D printing step that is a precursor to making the carbon aerogel. To address this, the graphene oxide thickener is replaced in whole or in part by other water soluble thickeners such as soluble cellulose derivatives or soluble polyoxyalkylene compounds.

In various embodiments, the development of viscosity in the ink over time is delayed to such an extent that the ink develops a viscosity an order of magnitude lower than that of inks containing graphene oxide.

Thus in various embodiments the ink compositions contain an acid catalyzed RF resin and enough of a non-GO thickener to overcome any observed increase in viscosity during the time the ink is being 3-D printed. In various aspects, the methods of making the carbon aerogels disclosed herein involve conventional steps of gelation, solvent exchange, supercritical $CO_2$ drying or ambient drying, carbonizing, and activating carried out in sequence beginning on the 3-D part printed with the new ink composition.

Further areas of applicability will become apparent from the description provided herein. The description and specific examples in this summary are intended for purposes of illustration only and are not intended to limit the scope of the present disclosure.

DRAWINGS

The drawings described herein are for illustrative purposes only of selected embodiments and not all possible implementations, and are not intended to limit the scope of the present disclosure.

Figure 1 is a flowchart illustrating operations that may be performed to form an ink comprised of a suspension of thickener, resorcinol, and formaldehyde;

Figure 2 is a flowchart illustrating operations that may be performed in printing a 3D structure using the ink;

Figure 3 is a flowchart illustrating operations that may be performed in carbonizing and activating the 3D printed structure formed in Figure 2; and

Figure 4 is a picture of a 3D printed structure formed using the carbon aerogel of the present disclosure.

Figure 5 shows a CV curve of an unactivated 3D printed sample at different scan rates.

Figure 6 shows a CV curve of an activated 3D printed sample at different scan rates.

Figure 7 is a plot of the specific capacitance of activated and unactivated electrodes at various current densities.

Figure 8 shows (a) digital photograph and (b) SEM image of DIW-CA. Magnified SEM images of (c, e) DIW-CA and (d, f) DIW-ACA. Inset in (a) shows 3D-printed organic aerogel before carbonization.

Figure 9 shows (a) Nitrogen adsorption/desorption isotherms and (b) pore size distribution of DIW-CA and DIW-ACA.

Figure 10 shows Electrochemical performance of DIW-CA, DIW-ACA and Bulk-CA. (a, c and e) Cyclic voltammograms collected as a function of scan rate from 5 mV/s to 100 mV/s. (b, d and f) Galvanostatic charge and discharge profiles collected at different current densities from 1 A/g to 10 A/g.

Figure 11 shows (a) Specific capacitance and (b) capacitive retention of DIW-CA, DIW-ACA and bulk-CA.

Figure 12 shows (a-c) CV curves from 5 mV/s to 100 mV/s for DIW-CA-2, DIW-CA-4, and DIW-CA-8 and (d-f) GCD curves (from 1 A/g to 10 A/g) for DIW-CA-2, DIW-CA-4, and DIW-CA-8, respectively.

Figure 13 shows Gravimetric capacitance of the DIW-CA-2, DIW-CA-4 and DIW-CA-8 electrodes obtained at different current densities.

Corresponding reference numerals indicate corresponding parts throughout the several views of the drawings.

DETAILED DESCRIPTION

Example embodiments will now be described more fully with reference to the accompanying drawings.

In one embodiment, a method of forming a carbon aerogel involves 3-D printing an ink to make a printed part, wherein the ink comprises solvent, a resorcinol-formaldehyde resin, and an organic thickener; removing the solvent from the printed part; and carbonizing the printed part to make the aerogel. The resorcinol-formaldehyde resin contains an acid catalyst and, in an embodiment, is characterized by having formaldehyde: phenol molar ratio greater than 1:1. The organic thickener is soluble in water and has a suitable molecular weight such that dissolving it in water raises the viscosity of the water solution. In various embodiments, the thickener is made of only C, H, and O atoms, and contains only ether or alcohol functional groups. In one embodiment, the thickener is also free of oxirane groups.

In some embodiments, the ink further comprises a thixotropic agent. An example is hydrophilic fumed silica. When the thixotropic agent is present, the method generally will involve a step of removing the thixotropic agent from the downstream aerogel, such as with HF etching to remove silica from the printed part.

In exemplary embodiments, the organic thickener comprises a soluble cellulose derivative or a soluble polyoxyalkylene compound. The acid catalyst comprises acetic acid, in non-limiting fashion. In some embodiments, the ink is free of graphene oxide. In others, the ink contains graphene oxide in addition to the organic thickener, but not so much as to cause an unacceptable viscosity increase during the 3-D printing.

In addition to the methods that start with providing an ink composition as detailed further herein, the teachings provide the improved carbon aerogels made by those methods. Advantageously, they are in a configuration useful as porous electrodes in supercapacitors, capacitive desalination, flow batteries, and the like.

In another embodiment, a 3-D printing ink contains solvent comprising water; an organic thickener; resorcinol and formaldehyde; and an acid catalyst that catalyzes a reaction between the resorcinol and formaldehyde. As before, the thickener is soluble in water, is made of only C, H, and O atoms, and contains only ether groups - exclusive of oxirane groups - or alcohol functional groups.

In various embodiments, the ink further comprises a thixotropic additive, which can be fumed silica, and which can be removed with HF etching. The acid catalyst comprises acetic acid in a preferred embodiment, and the molar ratio of resorcinol to formaldehyde in the ink is less than 1:1, in an illustrative embodiment. As noted the ink can contain or not contain graphene oxide, as long as the organic thickener is present. In various embodiments, the organic thickener comprises hydroxypropylmethylcellulose or a polyoxyalkylene compound. The ink can contain about 10% to 60% by weight of the resin.

In another embodiment, a supercapacitor comprises a positive electrode, a negative electrode, and a separator disposed between the electrodes, and at least one of the positive electrode, negative electrode, and separator comprises a carbon aerogel made by the methods described herein, starting with the ink formulations containing the organic thickener. Thanks to the new synthetic method, the carbon aerogel electrode can attain a specific capacitance above 80 F/g, above 120 F/g or above 200 F/g. In one embodiment, the electrode has a specific capacitance of about 240 F/g.

Likewise a flow battery is provided where one of its electrodes comprises a porous carbon aerogel made as described herein beginning with 3-D ink compositions containing the organic thickeners.

A flow through capacitive deionization cell comprises two porous electrodes - a positive electrode and a negative electrode - connected so as to provide a cell voltage of $V_{cell}$. At least one of the electrodes is a porous carbon aerogel made by the methods described herein. In operation, brackish water flows through the cell; negative ions are captured in the positive electrode and positive ions are captured in the negative electrode. Removing the ions turns the brackish water into desalinated water. The cell is regenerated by reversing the polarity, whereupon the ions are expelled from the respective electrodes.

The present disclosure involves systems and methods for the manufacture and use of 3D printed structures with channels in one direction for bulk flow. Having the channels formed in one direction may enable the lowering of flow resistance (and thus lower pumping costs) while still having high surface area and high electrical conductivity. The high surface area and high electrical conductivity contributes to efficient salt removal in a deionization system being used for desalination purposes. Still further applications exist, such as flow batteries, where bulk flow needs to be orthogonal to diffusion, and where this technology is expected to be highly applicable and highly useful.

*Preparation of inks containing graphene oxide*

Graphene oxide (GO), in one example purchased from Cheap Tubes Inc. of Grafton, VT, and having a lateral dimension of 300-800 nm were used to prepare the aerogels. The GO suspension was prepared by ultra-sonicating 0.08 g of GO in 1.473 g of formaldehyde (F) (37%solution) and 1.07 g of water for 24h. After sonication, 1.0 g of resorcinol (R) and 72$\mu$L of acetic acid (catalyst (C)) were added to the suspension This combination of R/F molar ratio of 1:2 and R/C molar ratio yielded a RF mass ratio of 42wt% and a GO concentration of 40 mg/ml. Preliminary rheology experiments showed that a thixotropic gel consistency is achieved within about 2,500 seconds for inks with GO concentration of 40 mg/ml, whereas, it takes about 10,000 seconds for inks with a GO concentration of 10 mg/ml.

*Making carbon aerogels*

Carbon aerogels are useful as electrodes in a variety of applications that depend on a high level of porosity. Starting with the new ink compositions, the aerogels are made using a number of knowing process steps. The ink is 3-D printed into the shape or configuration taken on by the electrodes. Gelation is completed in the printed part to make a hydrogel. Then the aqueous solvent is first exchanged with an organic solvent like acetone, and then the part is subject to supercritical drying to remove the solvent and create an intermediate polymer aerogel. The polymer aerogel is then subjected to carbonization at elevated temperature in an oxygen free environment such as in a nitrogen atmosphere. If a thixotropic agent was used in the ink, it is now removed, such as with the use of HF etching, followed by solvent exchange and supercritical drying to prepare a carbon aerogel. The carbon aerogel is then activated by exposing it to elevated temperature in an oxidizing environment. This increases the porosity of the carbon aerogel. The activated carbon aerogel is then ready for use as electrodes as described.

*3-D printing ink compositions*

The methods of making carbon aerogels starts with a 3-D ink composition containing solvent, the elements of an acid catalyzed resorcinol-formaldehyde (RF) resin, and a particular kind of organic thickener. Optional ingredients include other thickeners such as graphene oxide, as well as thixotropic additives like fumed silica to provide the ink with the right rheology for the 3-D ink writing process. The inks also optionally contain additives that can increase the conductivity of the inks, such as graphene nanoplatelets.

The solvent is based on a major portion of water, but can contain other non-aqueous solvents soluble in water. The additives are selected for their solubility in the solvent system. After printing, the water will be exchanged out and the printed part dried with supercritical $CO_2$.

The elements of the RF resin include formaldehyde, resorcinol, and an acidic component that serves as catalyst for the reaction of resorcinol and formaldehyde. Upon combining the resorcinol and formaldehyde in the presence of the catalyst, reaction begins, which will ultimately lead to a gel in the printed part. So when the catalyst is initially added, the components exist primarily as the unreacted monomers formaldehyde and resorcinol. Over time as reaction proceeds, more and more of the initially unreacted components become tied up in a polymer gel that will ultimately fill the ink composition or any 3-D part printed using the composition. However, in all cases, the ink is described as containing an RF resin, and in particular, an acid catalyzed RF resin.

The organic thickener is selected from water soluble polymers that contain only C, H, and O atoms, and that contain only ether or alcohol functional groups, and where further the ether groups do not encompass any oxirane functionality. Although the invention is not limited by theory, it is supposed that the thickener lacks certain structural features present in previously used graphene oxide that tended to catalyze the development of viscosity in the ink at a rate that sometimes made it difficult to print with the ink containing graphene oxide. In any event, by providing an ink composition containing the organic thickener as partial or complete replacement for the graphene oxide otherwise used, the 3-D printing is observed to take place under better control, including in favorable conditions an order of magnitude less viscosity developed in the time it takes to print a 3-D part.

Suitable thickeners include water soluble cellulose derivatives, such as without limitation hydroxyethyl cellulose, hydroxypropyl cellulose (HPC), hydroxyethyl methyl cellulose, hydroxypropyl methyl cellulose (HPMC), and ethyl hydroxyethyl cellulose.

Another class of thickeners is the class of compounds known as polyoxyalkylene compounds. Formally, these water soluble thickeners are homopolymers and copolymers of ethylene oxide and propylene oxide. The copolymers can be block or heteric, and contain sufficient ethylene oxide content to maintain water solubility. In some aspects, the water soluble polyoxyalkylene compounds are prepared by adding ethylene oxide or propylene (and even higher analogs such as butylene oxide, as long as water solubility is maintained) to various initiators, such as ethylene glycol, propylene glycol, glycerin, trimethylolpropane, pentaerythritol, and so on. Others include alcohol alkoxylates such as those prepared from $C_1$ to $C_{24}$ alcohols. In various embodiments, the thickeners include associative thickeners prepared by capping an ethylene oxide or propylene oxide chain with a C8 or higher oxirane.

Polyvinyl alcohol is another example of a thickener useful in the ink com positions.

The inks can also contain other thickeners not limited by the structural constraints of the organic thickener. These include graphene and graphene oxide. The idea is to use enough of the new organic thickener to make an ink that overcomes the too-rapid viscosity development characteristic of inks thickened solely by graphene oxide.

Optionally, the ink compositions can contain a so-called thixotropic agent to provide the ink with just the right viscosity for being extruded during the 3-D printing step. Fumed silica is one example. If it is used, it is normally preferred to remove it from the carbon aerogel using a hydrofluoric acid (HF) etch step, illustrated in the figures and working examples.

The ink compositions can contain other components as long as they do interfere with the ink writing process or the synthesis of the carbon aerogels herein described.

*3-D printing of the ink compositions*

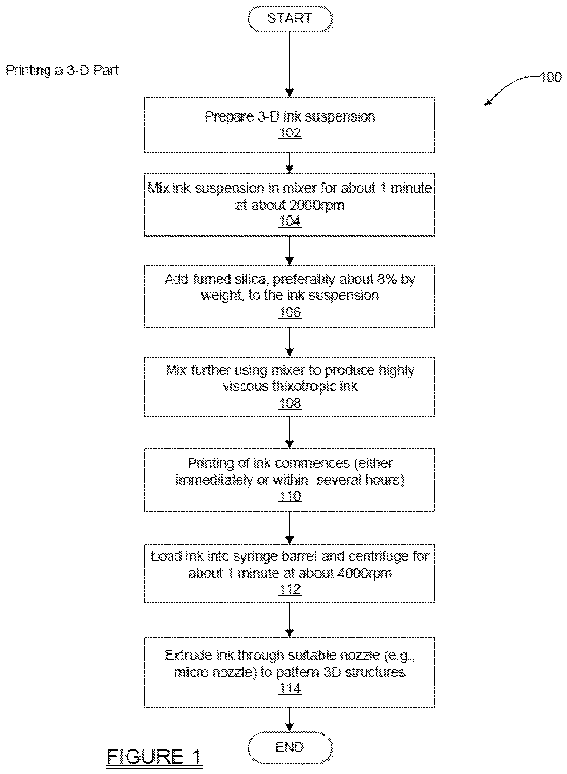

Referring to Figure 1, a flowchart 100 is illustrated to help describe the 3D printing of the ink compositions (for convenience, these will be referred to as "inks." At operation 102 the ink is initially put together using example amounts of resorcinol, formaldehyde, thickener, and catalyst. At operation 104 the ink is then mixed in a suitable mixer, for example a planetary centrifugal mixer such as those available from Thinky USA Inc. The mixing is carried out for about a minute at suitable speed, for example about 2000 rpm. At operation 106 fumed silica is added, preferably about 8% by weight, to the ink and then mixed again, as indicated at operation 108, using the mixer (e.g., planetary centrifugal mixer from Thinky USA Inc.) The mixing at operation 108 produces a highly viscous thixotropic ink. When the inks contain graphene oxide, and depending on the gelation time of the suspension, printing of the ink commences immediately for the 40mg/ml concentration of GO or about 4 hours later for the 10mg/ml concentration of GO, as indicated at operation 110.

The ink is then loaded into a syringe barrel and centrifuged for about a minute at 4000 rpm to remove air bubbles, as indicated at operation 112. The ink is then extruded through a micro nozzle (e.g., 600 $\mu$m or 250 $\mu$m diameter micro nozzle) to pattern 3D structures, as indicated at operation 114.

Using the above described process, patterns can printed on a substrate such as a glass substrate, coated for example with PTFE spray. Simple cubic lattices with multiple alternating orthogonal layers of parallel cylindrical rods are printed, in a non-limiting embodiment. The diameter of the cylindrical rods is set by the diameter of the nozzle, and the center-to-center rod spacing of 1.2 mm (for a 600 $\mu$m nozzle) and 0.8 mm (for a 250 $\mu$m nozzle) are respectively achieved. In a particular embodiment, a plurality of layers up to a total of 10 layers is stacked on the structure such that each layer has a Z-direction spacing of 0.3 mm. In order to avoid cracking during printing due to evaporation of water, drops of iso-octane (2,2,4-trimethylpentane) are added as needed.

*Gelation and Processing of the printed part*

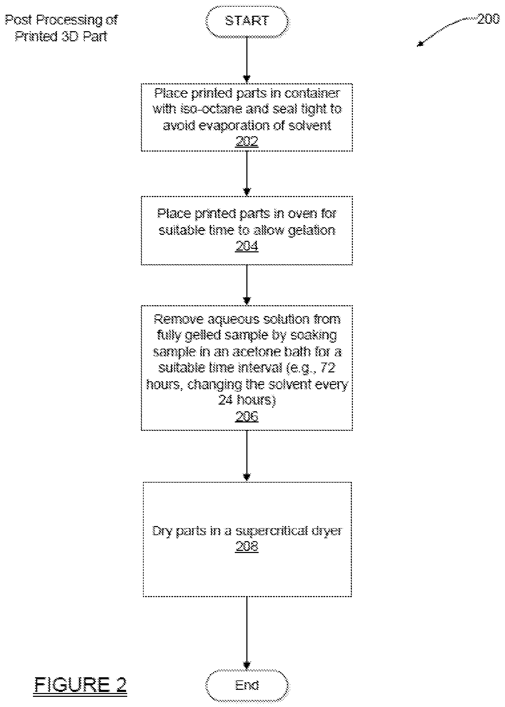

Referring to Figure 2 and flowchart 200, the printed parts on the glass substrate are placed in a container with iso-octane and sealed tightly to avoid evaporation of the solvent, as indicated at operation 202. The printed parts, while positioned on the glass substrate, may then be then placed in an oven at about 80°C for a suitable time period to allow for gelation, as indicated at operation 204. In one example a time interval of about 72 hours is sufficient to achieve gelation. Once the printed part is gelled, the aqueous solvent (water in this example) is removed by soaking the sample in an acetone bath for a suitable time interval, as indicated at operation 206. In one example this time interval is three days. It is advantageous for the solvent to be exchanged about every 24 hours. This step is helpful as the following procedure of supercritical drying is carried out with $CO_2$. The samples are then supercritically dried in $CO_2$ at a critical temperature of preferably about 55°C, and at a pressure range of preferably about 1200-1400 psi, as indicated at operation 208.

*Carbonization and activation of 3D printed part*

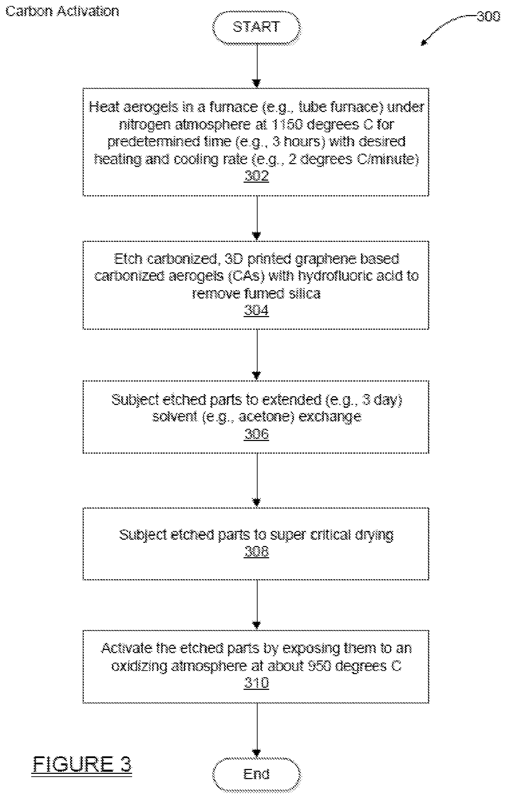

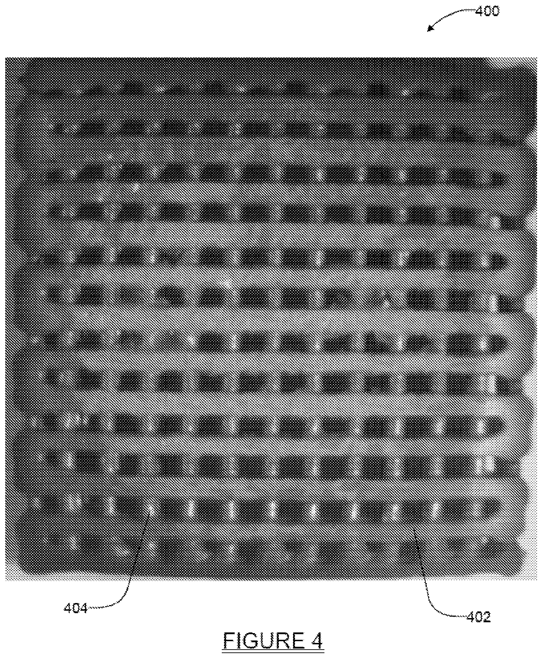

The processed printed part is now at a stage of being a polymeric aerogel. Referring to flowchart 300 of Figure 3, the carbonization and activation of the aerogel involves carbonizing the supercritically dried 3D printed organic (or polymeric) gel to form carbon aerogels. As indicated at operation 302, the aerogels are subjected to a carbonizing step, which is a heat treatment process where the samples are heated in a tube furnace under nitrogen atmosphere at preferably about 1050°C for 3h with a heating and cooling rate of preferably about 2°C/min. The carbonized 3D printed carbon aerogels are then etched with hydrofluoric acid to remove fumed silica, as indicated at operation 304. The etched parts are then again subjected to an extended solvent exchange, for example a three-day solvent (acetone) exchange, as indicated at operation 306, followed by a supercritical drying period, as indicated at operation 308. For activation, the samples are then exposed to an oxidizing atmosphere at preferably about 950°C, as indicated at operation 310.
One example of a 3D printed part 400 formed in accordance with the above described operations is shown in Figure 4. It will be appreciated that while the part 400 forms a lattice structure with perpendicularly extending runs 402 and 404 arranged in alternating fashion in the Z direction, that the teachings provide herein are not limited to such a structure. The teachings provided herein may be used to a wide variety of different 3D structures having different cross sectional configurations.
The carbon aerogels fabricated in accordance with the above-described teachings form porous solids with interconnected carbon particles and thus exhibit high surface area and electrical conductivity along with high structural stability. The processes for formulating carbon aerogels through a direct ink writing process, as described herein, provides control over pore size as well as the geometries of organic and carbon aerogels. When the 3D printed carbon aerogels are activated they yield high surface area carbon aerogels.

EXAMPLES

*Example 1 - acid catalyzed RF ink thickened with graphene oxide.*

Graphene oxide (GO) purchased form Cheap Tubes Inc. having a lateral dimension of 300-800 nm were used to prepare the aerogels. The GO suspension was prepared by ultrasonicating 0.08 g of GO in 1.473 g of formaldehyde (F) (37% solution) and 1.07 g of water for 24h. After sonication, 1.0 g of resorcinol (R) and 72$\mu$L of acetic acid (catalyst (C)) were added to the suspension. This combination of R/F molar ratio of 1:2 and R/C molar ratio yielded a RF mass ration of 42wt% and a GO concentration of 40 mg/ml. Preliminary rheology experiments showed that a thixotropic gel consistency is achieved within 2500 seconds for inks with GO concentration of 40 mg/ml, whereas, it takes 10000 second for inks with GO concentration of 10 mg/ml.
The GOlformaldehyde/water suspension was mixed with required amounts of resorcinol and catalyst (mentioned in earlier section) was mixed in a Thinky mixer for a minute at 2000 rpm. Fumed silica (8% by weight) was added to the GO_ARF suspension and mixed again using Thinky so that highly viscous thixotropic ink is obtained Depending on the gelation time of the suspension, printing of the ink commences immediately (for 40mg/ml concentration of GO) or 4 hours later (for 10mg/ml concentration of GO).

The ink is then loaded into a syringe barrel and centrifuged for a minute at 4000 rpm to remove air bubbles, after which the ink is extruded through a micro nozzle (600 $\mu$m or 250 $\mu$m diameter) to pattern 3D structures. The patterns were printed on a glass substrate coated with PTFE spray. Simple cubic lattices with multiple orthogonal layers of parallel cylindrical rods were printed alternately. The diameter of the cylindrical rods equals the diameter of nozzle and the center-to-center rod spacing of 1.2 mm (for 600 $\mu$m nozzle) and 0.8 mm (250 $\mu$m nozzle) were respectively used. A total of 10 layers were stacked on the structure such that each layer has a z spacing of 0.36 mm for a 600 micron nozzle and 0.15 mm for a 250 micron nozzle. In order to avoid cracking due to evaporation of water, or clogging of the nozzle due to drying of ink, drops of iso-octane (2,2,4-trimethyl-pentane) was added onto the printed structure frequently. The printed parts on the glass substrate is carefully placed in a container with iso-octane and sealed tightly to avoid evaporation of the solvent and are placed in the oven at 80°C for 72 h for gelation.

Once gelled, the aqueous solvent (water in this case) is removed by soaking the sample in an acetone bath for 3 days. Note that the solvent needs to be exchanged every 24 h. This step is crucial as the following procedure of super critical drying is carried out with $CO_2$. The samples are then super critically dried in liquid $CO_2$ at a critical temperature of 55°C and at a pressure range of 1200-1400 psi.

*Carbonization and activation of 3D printed part*

This process involves carbonizing the supercritically dried 3D printed GO_ARF graphene organic gel to form carbon aerogels. The aerogels were subjected to a heat treatment process where the samples were heated in a tube furnace under nitrogen atmosphere at 1050°C for 3h with a heating and cooling rate of 2°C/min. The carbonized 3D printed graphene based CAs were then etched with hydrofluoric acid to remove fumed silica. The etched parts were again subjected to a three-day solvent (acetone) exchange followed by super critical drying. For activation, the samples are now exposed to an oxidizing atmosphere at 950°C.

*Example 2 - ink thickened with an organic thickener*

A suspension of 3 g of water, 3.4 g of formaldehyde (F) (37% solution) and 6 wt% of cellulose was prepared by ultra-sonication for 24h. After sonication and prior printing, 2.46 g of resorcinol (R) and 88 $\mu$L of acetic acid (catalyst (C)) were added to the suspension. This combination of R/F molar ratio of 1:2 and R/C molar ratio of 1:15, yielded a RF mass ratio of 42 wt%. After the addition of resorcinol, the 6 wt% of cellulose drops to 4 wt% in the overall suspension. The overall suspension is mixed for 5 min at 2000 rpm in a Thinky mixture until a through mixing of resorcinol with formaldehyde/water/cellulose suspension was obtained. However, for direct ink writing a thixotropic ink is necessary with elastic stiffness such that the extruded beads from the nozzle can span easily. To achieve the required stiffness in the inks, 9 wt% of hydrophilic fumed silica was mixed to the suspension and was then loaded to a syringe barrel for printing.

The ink which is loaded into a syringe barrel was centrifuged for a minute at 4000 rpm to remove air bubbles, after which the ink is extruded through a micro nozzle (600 $\mu$m or 250 $\mu$m diameter) to pattern 3D structures. The patterns were printed on a glass substrate. Simple cubic and face-centered lattices with multiple orthogonal layers of parallel cylindrical rods were printed alternately. The diameter of the cylindrical rods equals the diameter of nozzle and the center-to-center rod spacing of 1.2 mm (for 600 $\mu$m nozzle) and 0.8 mm (250 $\mu$m nozzle) were respectively used. A total of 10 layers were stacked on the structure such that each layer has a z spacing of 0.36 mm for 600 micron and 0.15 mm for 250 micron nozzle diameter. In other embodiments, up to 30 layers are stacked. In order to avoid cracking due to evaporation of water or clogging of the nozzle from ink drying, drops of iso-octane (2,2,4-trimethyl-pentane) were added onto the printed structure frequently.

The following steps are carried out on the printed parts:

*Curing*

The printed parts are cured in the oven for three days at 80°C.

*Solvent exchange*

After curing, the samples are exchanged with acetone to remove water for three days.

*Supercritical drying*

The samples are dried in a critical point dryer or Polaron in liquid $CO_2$.

*Carbonization*

The dried samples are carbonized in a tube furnace at 1050°C under nitrogen atmosphere for three hours at a heating rate of 2 C/min.

*Silica removal*

Once carbonized, the samples were given for HF etching to remove the silica particles, and the samples after silica removal are in ethanol solution.

*Solvent exchange and supercritical drying*

The samples are again subjected to solvent exchange from ethanol to acetone and are again supercritically dried.

*Activation*

Activation is done to further increase the surface area by creating a porous network. The samples are heated to 950°C in a tube furnace in $CO_2$ atmosphere. By tuning the time of exposure of the samples to $CO_2$, the surface area of the samples can be adjusted.

In the present case, the time of $CO_2$ exposure was altered until a mass loss of 60 percent was achieved after activation.

*Example 3 - viscosity development*

Storage modulus is measured as a function of time for the ink compositions of Examples 1 and 2. The storage modulus (viscosity) of formulated inks increases during the time it takes to make a 3-D printed part from the inks. The increase in modulus represents the change from low viscosity liquid to gel and then to a stiff solid. The gel time of the formulated inks is estimated using a rheometer to measure the storage shear modulus of the inks. When steady state is reached after about 5 or 6 hours, the storage modulus of the ink of Example 1 (the one made with graphene oxide thickener) is an order of magnitude higher than the steady state storage modulus of the ink of Example 2. In fact, once the ink of Example 1 reaches a steady state, the storage modulus is so high that it reaches a solid state from gelation and is difficult to extrude. For reference, the lower storage shear modulus of the ink of Example 2 at steady state is on the order of about 100,000 GPa. The lower storage modulus of the Example 2 ink containing the organic thickener makes it possible to use the ink to be extruded for 3-D printing for an extended period of time.

*Example 4*

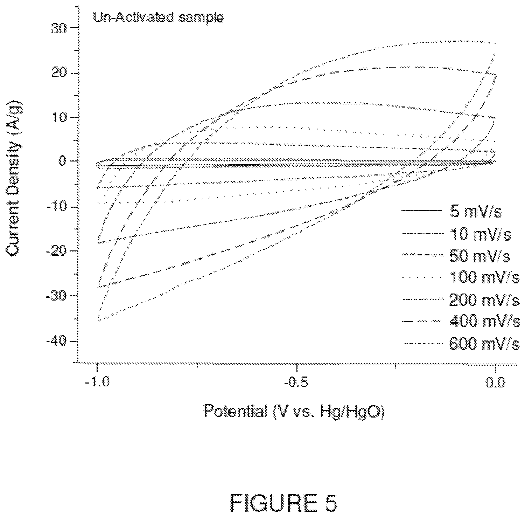

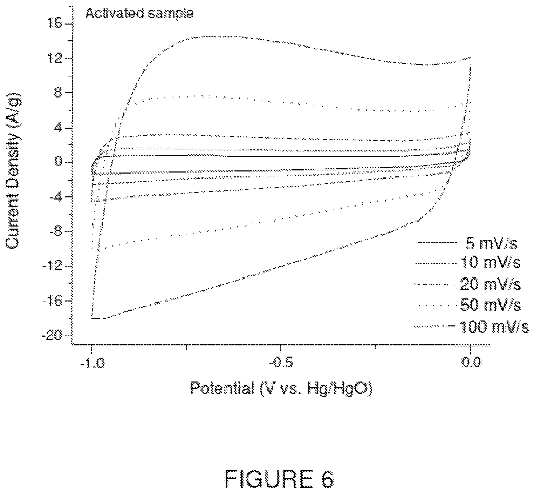

The electrochemical performances of electrodes prepared according to Example 2 are shown in Figures 5 and 6. The 3D printed samples are measured through CV curves at different scan rates.

The un-activated samples shown in Figure 5 (i.e., the carbon aerogel of Example 2 before the activation step) contain a semi-rectangular CV curve, which accounts for the higher internal resistance in these electrodes and lower surface area of the electrodes for lower capacitance values.

The CV curves in Figure 6 of the 3D printed electrodes after activation have a more rectangular shape indicating lower resistance of the samples and high surface area through activation and hence exhibits higher capacitance.

*Example 5*

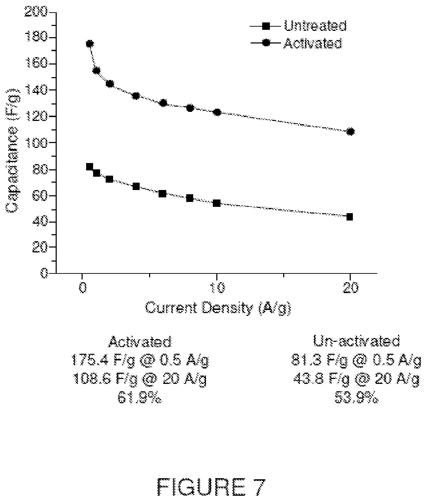

The specific capacitance of the activated and un-activated 3D printed electrodes (based on the ink of Example 2) at various current densities is plotted in Figure 7. At low current densities, highest specific capacitances of 81.3 and 175 F/g are observed for un-activated and activated electrodes as expected owing to the high surface area of activated electrodes

At higher current densities, only 54% of the capacitance is retained for un-activated samples and 62% for activated samples. At higher current densities, efficient electron transfer is required for quick current buildup. The higher rate capability of the activated electrodes is probably due to higher electrical conductivity and surface area of the electrodes through activation which enables fast ion diffusion through the thickness of the electrodes

*Example 6a*

To form a homogenous thixotropic ink of RF polymer, 6 wt% of hydroxy propyl methyl cellulose (purchased from DOW Chemicals) is mixed with formaldehyde and water and sonicated together for 24 h in a sonication bath. Since the formulation contains mostly water, cellulose serves as a viscosifier to meet the rheology requirements for reliable flow through the nozzle (of diameter as small as 100 $\mu$m) under shear. Even though the mixture forms a stiff gel, upon addition of resorcinol and acetic acid to the formaldehyde-cellulose mixture, the RF-cellulose mixture loses its stiffness in the gel. This is due to the endothermic reaction that occurs between resorcinol and formaldehyde via sol-gel chemistry.

Since the RF polymerization chemistry is time sensitive it is necessary to monitor the change in the stiffness of the ink with time. It can be seen from the rheology data that the inclusion of cellulose provides an ink with a low stiffness ($<10^3$ GPa), which is lower than the previously reported GO ink. Hence, to achieve the required stiffness, 9 wt% hydrophilic fumed silica particles (purchased from Carbosil EH5) is added to the RF-cellulose mixture. All the components are mixed using a planetary Thinky mixer at 2000 rpm for 1 to 5 minutes. The addition of silica particles, imparts both shear-thinning behavior and shear yield stress to the RF ink and is reflected in the rheology data where the stiffness increases to $10^5$ GPa which is on par with the previously developed GO inks.

The ink is then loaded into a syringe barrel (3 ml or 20 ml in volume) and centrifuged at 4500 rpm for 2 minutes to remove trapped gas, after which the ink is extruded through a micro nozzle (100-400 $\mu$m in diameter at the tip opening) to pattern 3D structures. Cubic lattices with multiple orthogonal layers of parallel cylindrical rods are printed alternately. The diameter of the cylindrical rods equals the inner diameter of the nozzle and the center-to-center rod spacing is kept constant at 0.8 mm. The z-spacing during the print is set to 60% of the nozzle diameter and the number of layers stacked on the structure is varied to achieve the desired thickness of the final electrode. To form the organic aerogels, the printed structures remain wet during printing and gelation so that the gels can be dried via supercritical drying to avoid collapse of pores due to capillary forces. Therefore, to avoid cracking due to evaporation of water, both printing and gelation are carried out in the presence of an organic solvent (2,2,4-trimethylpentane) that is immiscible with the aqueous RF ink.

The as-printed RF structure on the glass substrate is carefully placed in a container with the solvent (2,2,4-trimethylpentane) and sealed tightly before being placed in the oven for gelation at 80°C for 72 h. Once gelled, the aqueous solvent is removed by soaking the 3D printed parts in an acetone bath for 3 days with exchange of acetone every 24 h. Afterwards, the samples are supercritically dried using liquid $CO_2$. To form CAs, the dried 3D printed RF structures are subjected to a carbonization step where the samples are heated in a tube furnace under nitrogen atmosphere at 1050 °C for 3 h. These carbonized aerogels are denoted as DIW-CA. After carbonization, the silica particles incorporated in DIW-CAs are etched with hydrofluoric acid similar to the previous work (Baumann et al., Journal of Non-Crystalline Solids 354, pp. 3513-3515, 2008). To activate these aerogels, the samples are heated to 950 °C under $CO_2$ atmosphere. By tuning the time of exposure of the samples to $CO_2$, a controlled etching of carbon framework is carried out. This results in the formation of new micropores which in turn increases the surface area. In the present study, the time of exposure was adjusted until a mass loss of nearly 60% (with a St. Deviation of 2%) was achieved after the activation and the obtained samples are referred to as DIW-ACA.

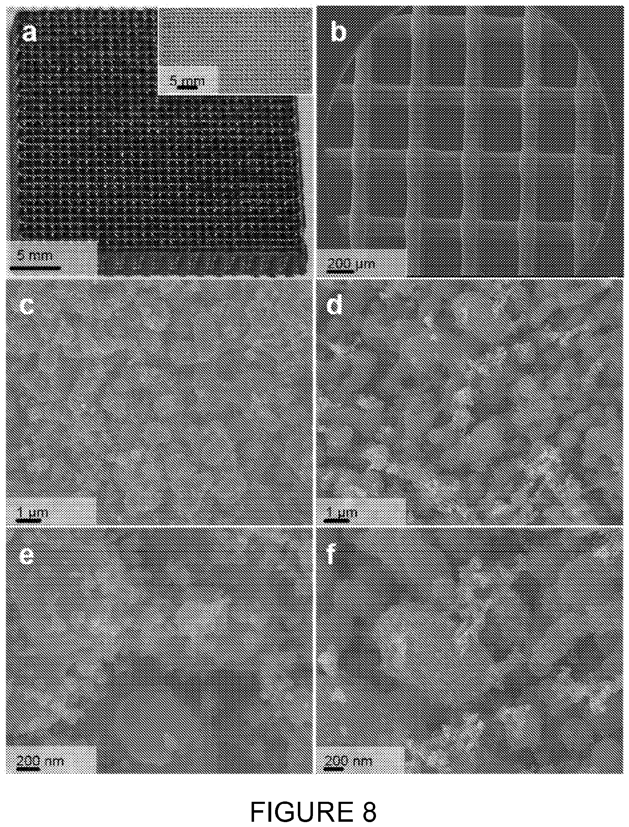

Fig. 8a shows an optical image of a DIW-CA where the inset - an optical image shows the 3D printed RF aerogel before carbonization. The printed DIW-CA lattice maintains its structural integrity through a series of post-processing steps (e.g., solvent exchange, gelation, carbonization, activation). The scanning electron micrograph of the DIW-CA cubic lattice (Fig. 8b) contains parallel cylindrical filaments with multiple orthogonal layers piled on top of each other. The RF inks are relatively soft and hence filament became ellipsoidal at every cross-over point in the lattice, the filament is ellipsoidal. These 3D simple cubic lattices are designed with an in-plane center-to-center rod spacing (*L*) of 0.8 mm and a rod diameter (*d*) of 0.25 mm, resulting in a spacing-to-diameter ratio (*L/d*) of ca. 3. The printed sample in Fig. 8a was printed with a print speed of 3 mm/sec, a pressure of 16 psi was applied to extrude the ink from the syringe barrel. For every incremental layer, the nozzle moves up by 0.15 mm or 0.24 mm depending on the nozzle diameter in the z-direction. The samples undergo a volumetric shrinkage of 21% during gelation, drying and carbonization. Hence, while printing this shrinkage is taken into consideration while setting the dimensions of the sample.

Upon closer examination (Fig. 8c) the morphology of the DIW-CA reveals a network of interconnected, fairly smooth micron-sized carbon ligaments that define a continuous macroporous network. This pore morphology is consistent with earlier reports of conventional CAs (Baumann et al., Journal of Non-Crystalline Solids 354, pp. 3513-3515 (2008)). The macroporous network results in a relatively low surface area of 26 m²/g. This relatively low surface area is due to the lack of microporosity in the DIW-CA (Table 1) which provided significant surface area for the pre-activated CA in previous reports. After activation resulting in 60% mass loss, the surface area for the DIW-ACA increases to over 1800 m²/g which is on the same order of that observed in other activated CAs (Baumann et al. 2008). Figures 8d reveals that after activation, the surface of the carbon particles is much rougher, and a much finer network structure emerges after the $CO_2$ activation.

*Table 1: Physical properties of the 3D printed carbon aerogels*

| Sample | Density (g/cm$^3$) | BET Surface Area (m$^2$/g) | Total Pore Volume (cm$^3$/g) | Micropore Pore Volume (cm$^3$/g) | Electrical Conductivity (S/m) |
|---|---|---|---|---|---|
| DIW-CA | 0.47 | 26.5 | 0.083 | 0.004 | 995 |
| DIW-ACA | 0.24 | 1894 | 0.746 | 0.638 | 180 |

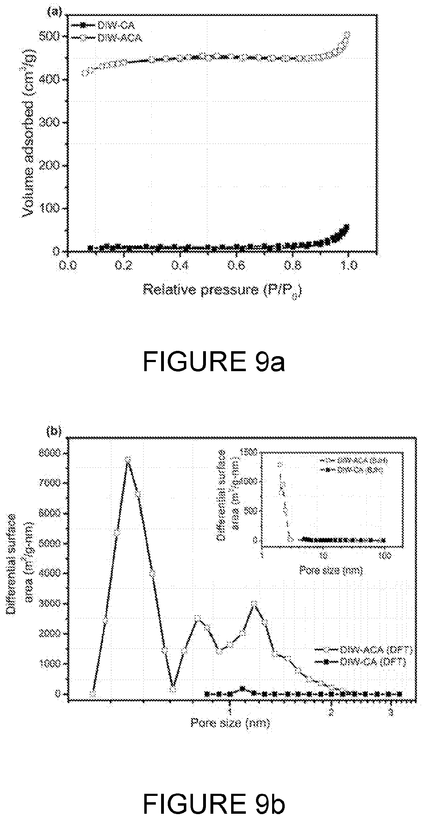

The microporous nature of the DIW-ACA is especially clear when examining the type II nitrogen adsorption-desorption isotherms in Fig. 9a with large absorbed volumes at low relative pressures. Other physical properties of the DIW-CA and DIW-ACA are summarized in Table 1. The two orders of magnitude increase in micropore volume suggests that a significant portion of this additional surface area is due to the formation of micropores. The pore size distributions as determined by Barrett-Joyner-Halenda (BJH) and density functional theory (DFT) methods support this conclusion (Fig. 9b). DIW-ACA, unlike the DIW-CA, contained significant microporosity with a sharp increase in surface area at low pore sizes. The BJH method does not accurately determine pore size in the micropore regime (<2 nm) so further analysis via DFT method was performed. Micropore analysis confirmed that nearly all the surface area in the DIW-ACA was due to newly formed pores less than 3 nm in diameter. These micropores give the DIW-ACA surface areas 3-50 times higher than other 3D-printed carbon-based aerogels. Together with good electrical conductivity (180 S/m), the DIW-ACA is a promising electrode material for water purification, electrocatalysis, and energy storage.

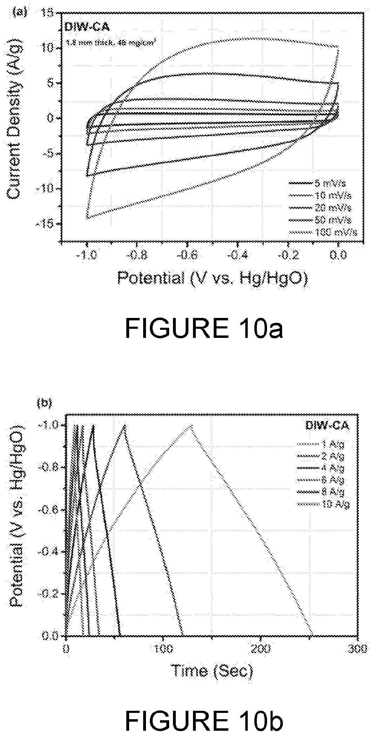

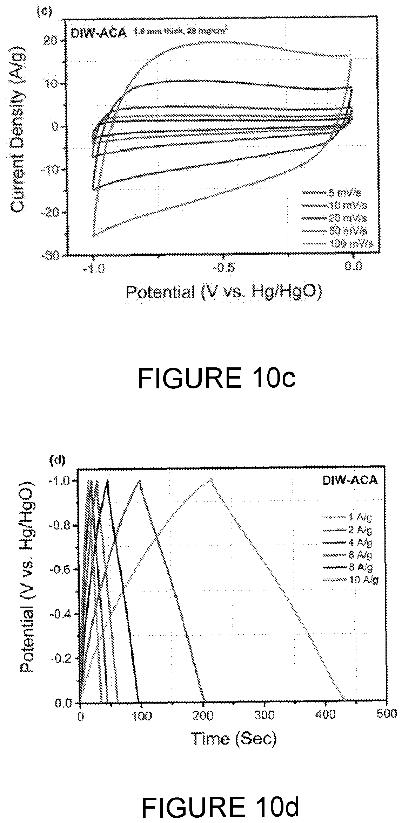

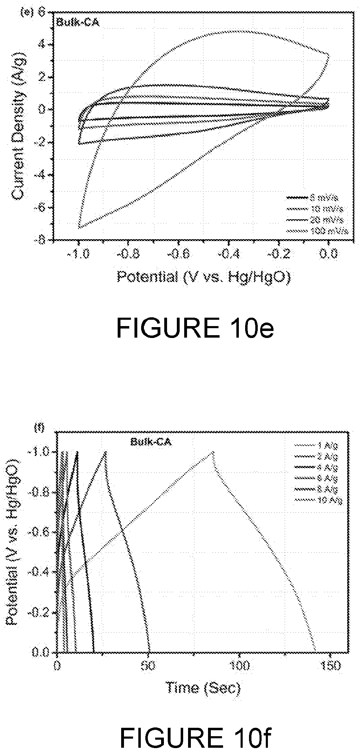

The electrochemical performances of the Bulk-CA (i.e. CA without architected pores), DIW-CA, and DIW-ACA (1.8 mm thick) electrodes, were evaluated in a three-electrode electrolytic cell in 3M KOH aqueous solution. The cyclic voltammetry (CV) curves and the galvanostatic charge discharge (GCD) curves are presented in Fig. 10a-f.

The CV and GCD curves provide good illustrations of how the pore architecture and surface area impact the capacitive performance of aerogels. The Bulk-CA represents the case without architected porosity, limited to native, random pores of 1 $\mu$m and below. Due to the limitations that this pore structure puts on mass transport within thick Bulk-CA, the CV curves exhibit gross distortions from the ideal rectangular shape at higher scan rates and the GCD curves deviate sharply from the ideal symmetric triangle. By contrast, simply adding architectured macropores, DIW-CA, produces CV curves with a much more rectangular and triangular shape for the CV and GCD curves, respectively. Finally, adding surface area to the electrode with architectured micropores, DIW-ACA, yields CV and GCD curves that are even closer to the ideal shapes indicative of excellent capacitive performance. In particular, DIW-ACA electrodes exhibit considerably enhanced gravimetric capacitance compared with the DIW-CA electrodes. This enhancement in capacitance can be ascribed to the substantially increased specific surface area after thermal activation, which provides more accessible surface area for the electrolyte ions for diffusion. It is presumed that all the surface area detected by nitrogen porosimetry (>1800 m$^2$/g) in the DIW-ACA is not electrochemically active as there is only factor of two increase in capacitance between the DIW-ACA and DIW-CA while the surface area increases by two orders of magnitude. Efforts to increase the electrochemically active is being pursued in a separate study. The small *iR* drop in the GCD curves indicate the small internal resistance of the electrodes. DIW-ACA electrodes with a longer discharge time than DIW-CA at all current densities also reflect the increased specific capacitance of activated carbon aerogels (Fang et al., J Appl Electrochem 35, pp. 229-233 (2005)).

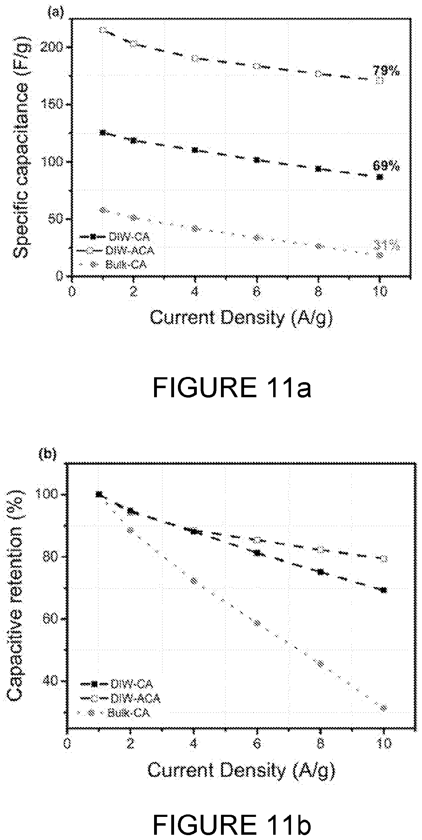

The gravimetric capacitance for each sample is calculated from the GCD curves collected at different current densities and are summarized in Fig. 11a. Comparing the DIW-CA with Bulk-CA (bulk discs prepared and processed in the same manner as DIW-CA) the specific capacitance of the DIW-CA (125 F/g at 1 A/g) is nearly two-fold higher than the Bulk-CA-ink (57 F/g at 1 A/g). As the only difference between the Bulk-CA and DIW-CA is 3D printed macroporosity (e.g. surface area, conductivity, pore size, etc.), this result suggests that the macropores of the DIW-CA significantly improve ion accessibility. Comparing the DIW-CA and DIW-ACA we see a further increase in capacitance. The DIW-ACA exhibited a high gravimetric capacitance of 215 F/g at a current density of 1 A/g, which is almost twice as much as that of DIW-CA (125 F/g at 1 A/g). The enhancement in capacitance is attributed to the increased surface area after thermal activation. The gravimetric capacitance of DIW-ACA exceeds the previously reported GO_GNP composite aerogel exhibiting 70 F/g at low current densities (Zhu et al., Nano Letters 16, pp. 3448-3456 (2016)). As the current density is increased, efficient electron transport and ion diffusion are necessary for charge build up and the resistance of the sample plays a vital role in the rate capability of the electrode. Both DIW-CA and DIW-ACA also have good capacitive retention of 69% and 79% (Fig. 11b) respectively at higher current density (10 A/g), which is more than twice that of the Bulk-CA. After activation, the gravimetric capacitance has been increased, and the rate capability has also been increased. We believe that the increased porosity after activation improves the ion accessibility. These data confirm the importance of using engineered macropores in aerogel electrodes for enhancing charged species transport.

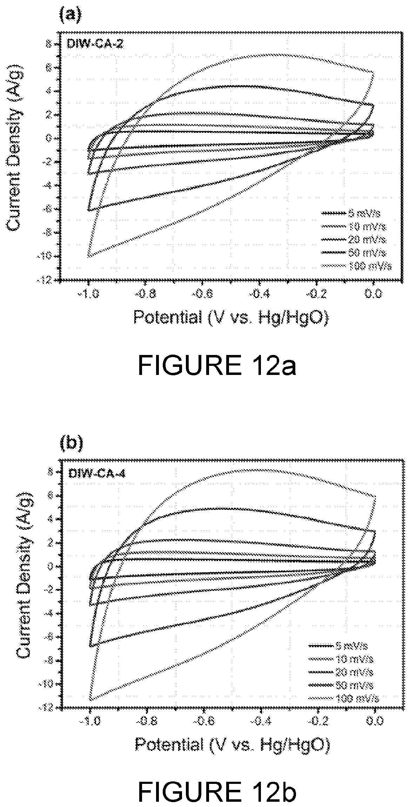

3D printing technique enables an ordered macropore structure of these electrodes which facilitates mass transfer by reducing the ion diffusion resistance. To understand the correlation between macroporosity and capacitive performance, electrodes were printed with different nozzle diameters ($d$) (400, 200 and 100 $\mu$m) with center-to-center rod spacing ($L$) of 800 $\mu$m and the height of the printed electrodes where kept constant to 1.5 mm. DIW-CA electrodes with varied spacing-to-diameter ratio ($L/d$) of 2 (800/400), 4 (800/200) and 8 (800/100) were synthesized in a similar fashion are addressed as DIW-CA-2, DIW-CA-4, and DIW-CA-8, respectively. The electrochemical performance of these samples along with their CV and GCD curves are condensed in Fig. 12a-f.

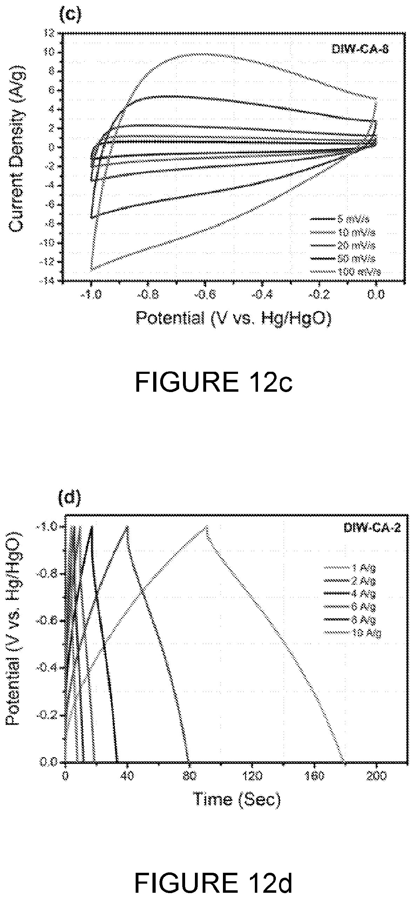

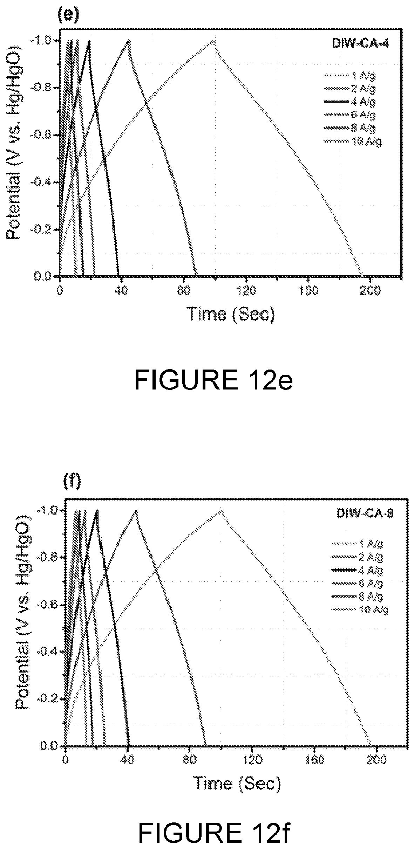

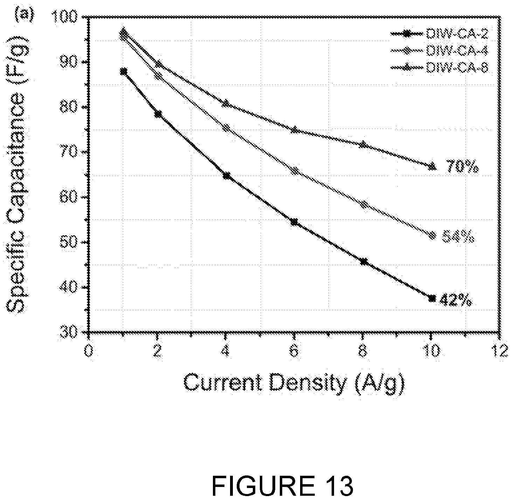

As can been seen in Fig. 12, when the nozzle diameter decreases from 400 $\mu$m to 100 $\mu$m, the CV curves (Fig. 12a-c) collected at higher scan rate (100 mV/s) have larger hysteresis loops which suggests better charge transfer through the ligaments as the ion diffusion length decreases with decreasing the nozzle diameter of the DIW-CA. The GCD curves (Fig. 12d-f) show an increase in discharge time as the nozzle diameter is decreased from 400 $\mu$m to 100 $\mu$m at a current density of 1 A/g. Although the DIW-CA electrodes with 200 $\mu$m and 400 $\mu$m shows comparable gravimetric capacitance under small current densities, their capacitive differences became more obvious when the current is increased. The data are summarized in Fig. 13.

Although these three samples have similar gravimetric capacitances at low current density of 1 A/g, the effect of varying nozzle diameters becomes more prominent at higher current density of 10 A/g. The capacitive retention of sample printed with 400 $\mu$m nozzle is only 42% and is improved to 70% when printed with 100 $\mu$m nozzle diameter. By varying the filament diameter of the printed electrode, the ion diffusion length is varied and affects the electrochemical performance of these electrodes. As expected, when these samples are activated, both gravimetric capacitance and the capacitive retention are increased.

*Example 6b - Fabrication of the 3d printed electrodes*

Resorcinol (R) and formaldehyde solution (F) (37wt%) purchased from Sigma Aldrich were used to prepare the organic aerogels. Predetermined amounts of formaldehyde solution (1.7 g), DI water (1.5 g) was mixed with 6wt% of hydroxypropyl methyl cellulose (purchased from DOW chemicals). The mixture is sonicated in a temperature-controlled bath for 24h. To this mixture, 1.23g of R and 44 $\mu$L of glacial acetic acid. To further tailor the ink to be thixotropic, 9wt% of Carbosil-EH5 fumed silica, was added and mixed in the Thinky mixture for 5 minutes. The as-prepared ink is loaded into a 3ml syringe barrel (EFD) and centrifuged for a minute at 4500 rpm to remove air bubbles, after which the ink is extruded through a micro nozzle (400 $\mu$m diameter) to pattern 3D structures on a glass substrate. For direct ink writing, the syringe was attached by a luer-lock to a smooth-flow tapered nozzle whose inner diameter(d) is 400 $\mu$m. The ink was then extruded by means of an air powered fluid dispenser (Ultimus V, EFD) which provides an appropriate pressure (in the range of 12-15 psi) for writing and the writing speed was kept at 3 mm/sec for all the 3D printed structures. Simple cubic lattices with multiple orthogonal layers of parallel cylindrical rods were printed alternately. The diameter of the cylindrical rods equals the diameter of nozzle (d) and the center-to-center rod spacing (L) was varied depending on the type of electrode. The height of the electrodes was varied from 1 mm to 3 mm and the layers were stacked on the structure such that each layer has a z spacing of 60% the diameter of the nozzle diameter. To avoid cracking or drying due to evaporation of water, soon after printing, the 3D printed structures are immersed in a jar containing solvent (iso-octane) and cured in an oven at 80°C for 72 h to form organic aerogels.

*Example 6c - Carbonization and activation of aerogels*

This process involves carbonizing the supercritically dried RF gels to form carbon aerogels (CAs). The aerogels were subjected to a heat treatment process where the samples were heated in a tube furnace under nitrogen atmosphere at 1050°C for 3h with a heating and cooling rate of 2°C/min. The carbonized 3D printed graphene based CAs were then etched with hydrofluoric acid to remove fumed silica. The etched parts were again subjected to a three-day solvent (acetone) exchange followed by super critical drying. For activation, the samples are subjected to a controlled burn off under an oxidizing atmosphere such as $CO_2$ at 950°C until a 60% mass loss of the sample was obtained.

*Example 6d - Characterization*

*Nitrogen Porosimetry.* Textural properties were determined by Brunauer-Emmett-Teller (BET) and Barrett-Joyner-Halenda (BJH) methods using an ASAP 2020 Surface Area Analyzer (Micromeritics Instrument Corporation) via nitrogen porosimetry. Samples of approximately 0.1 g were heated to 423 K under vacuum ($10^{-3}$ Pa) for at least 24 hours to remove all adsorbed species. Scanning electron micrographs in Fig. 8 was obtained with a JEOL7401-F SEM at a 5kV accelerating voltage.

The electrochemical measurements were carried out using electrochemical workstation (CHI 660D and EC-Lab SP-300) in a three-electrode electrolytic cell under 3M KOH aqueous solution. The working electrodes were prepared by pressing carbon aerogels in between two pieces of nickel foams. A piece of carbon foil and Hg/HgO electrode were working as counter electrode and reference electrode, respectively.

*Example 6e - Calculation*

Gravimetric capacitance (C) of single electrodes are calculated based on the galvanostatic charging and discharging curves using the following equation.

$$C = \frac{I \times t}{\Delta U \times m}$$

Where $C$ is the gravimetric capacitance (F g$^{-1}$), $\Delta U$ is the potential window (V), $I$ is the discharge current (A), $t$ is the discharge time (s), and $m$ is the mass loading of the materials on the electrodes (g).

**Claims**

1.  A method of forming a carbon aerogel, comprising

    3-D printing an ink to make a printed part, wherein the ink comprises solvent, a resorcinol-formaldehyde resin, and an organic thickener;
    removing the solvent from the printed part; and
    carbonizing the printed part to make the aerogel,
    wherein the resorcinol-formaldehyde resin comprises an acid catalyst and has a formaldehyde: resorcinol molar ratio greater than 1:1,
    wherein the thickener is soluble in water, is made of only C, H, and O atoms, and contains only ether or alcohol functional groups.

2.  The method of claim 1, wherein the ink further comprises a thixotropic agent.

3.  The method of claim 2, wherein the thixotropic agent comprises fumed silica and the method further comprises HF etching to remove silica from the printed part.

4.  The method according to any one of claims 1 - 3, wherein the organic thickener comprises a soluble cellulose derivative or a soluble polyoxyalkylene compound.

5.  The method according to any one of claims 1 - 4, wherein the acid catalyst comprises acetic acid.

6.  The method according to any one of claims 1 - 5, wherein the ink further comprises graphene oxide.

7.  The method according to any one of claims 1 - 5, wherein the ink is free of graphene oxide.

8.  A 3-D printing ink, comprising:

    a solvent comprising water;
    an organic thickener;
    resorcinol and formaldehyde; and
    an acid catalyst that catalyzes a reaction between the resorcinol and formaldehyde,
    wherein the thickener is soluble in water, is made of only C, H, and O atoms, and contains only ether or alcohol functional groups and
    wherein the ink is free of graphene oxide.

9.  The ink of claim 8, further comprising a thixotropic additive, preferably comprising fumed silica.

10. The ink of claim 8 or claim 9, wherein the acid catalyst comprises acetic acid.

11. The ink according to any one of claims 8 - 10, wherein the molar ratio of resorcinol to formaldehyde is less than 1:1.

12. The ink according to any one of claims 8 - 11, wherein the thickener comprises hydroxypropylmethylcellulose or a polyoxyalkylene compound.

13. The ink according to any one of claims 8 - 12, comprising 10% to 60% by weight of the resin.

14. A supercapacitor comprising a positive electrode, a negative electrode, and a separator disposed between the electrodes, wherein at least one of the positive electrode, negative electrode, and separator comprises a carbon aerogel made using an ink according to any one of claims 8 - 13 wherein the carbon aerogel having a specific capacitance above 200 F/g.


**Patentansprüche**

1. Verfahren zum Bilden eines Carbon Aerogels mit

   3D Drucken einer Tinte zum Bilden eines gedruckten Teils, wobei die Tinte ein Lösungsmittel, ein Resorcinformaldehydharz, und ein organisches Verdickungsmittel aufweist;
   Entfernen des Lösungsmittels von dem gedruckten Teil; und
   Karbonisieren des gedruckten Teils zum Bilden des Aerogels,
   wobei das Resorcinformaldehydharz einen Säurekatalysator aufweist und ein Formaldehyd - Resorcinmolverhältnis größer als 1:1 aufweist,
   wobei das Verdickungsmittel in Wasser löslich ist, nur aus C, H und O Atomen gebildet ist und nur ether- oder alkoholfunktionelle Gruppen aufweist.

2. Verfahren nach Anspruch 1, wobei die Tinte weiter ein Thixotropiermittel aufweist.

3. Verfahren nach Anspruch 2, wobei das Thixotropiermittel pyrogene Kieselsäure aufweist und das Verfahren weiter HF-Ätzung zum Entfernen von Kieselsäure von dem gedruckten Teil aufweist.

4. Verfahren nach einem der Ansprüche 1 - 3, wobei das organische Verdickungsmittel ein lösliches Cellulosederivat oder eine lösliche Polyoxialkülenverbindung aufweist.

5. Verfahren nach einem der Ansprüche 1 - 4, wobei der Säurekatalysator Essigsäure aufweist.

6. Verfahren nach einem der Ansprüche 1 - 5, wobei die Tinte weiter Graphenoxid aufweist.

7. Verfahren nach einem der Ansprüche 1 - 5, wobei die Tinte frei von Graphenoxid ist.

8. 3D Druck Tinte mit:

   einem Lösungsmittel mit Wasser;
   einem organischen Verdickungsmittel;
   Resorcin und Formaldehyd; und
   einem Säurekatalysator, der eine Reaktion zwischen dem Resorcin und dem Formaldehyde katalysiert,
   wobei das Verdickungsmittel in Wasser löslich ist, nur aus C, H und O Atomen gebildet ist, und nur ether- oder alkoholfunktionelle Gruppen aufweist und
   wobei die Tinte frei von Graphenoxid ist.

9. Tinte nach Anspruch 8, die weiter ein thixotropes Additiv aufweist, vorzugsweise pyrogene Kieselsäure aufweist.

10. Tinte nach Anspruch 8 oder Anspruch 9, wobei der Säurekatalysator Essigsäure aufweist.

11. Tinte nach einem der Ansprüche 8 - 10, wobei das Molverhältnis von Resorcin zu Formaldehyde kleiner als 1:1 ist.

12. Tinte nach einem der Ansprüche 8 - 11, wobei das Verdickungsmittel Hydroxypropylmethylcellulose oder eine Polyoxialkülenverbindung aufweist.

13. Tinte nach einem der Ansprüche 8 - 12, die 10 % bis 60 % nach Gewicht von dem Harz aufweist.

**14.** Superkondensator mit einer positiven Elektrode, einer negativen Elektrode und einem Separator, der zwischen den Elektroden angeordnet ist, wobei mindestens eine der positiven Elektrode, der negativen Elektrode und des Separators ein Carbonaerogel aufweist, das mit einer Tinte nach einem der Ansprüche 8 - 13 gebildet ist, wobei das Carbonaerogel eine spezifische Kapazität über 200 F/g aufweist.

**Revendications**

**1.** Procédé de formation d'un aérogel de charbon, comprenant

Une impression 3D d'une encre pour réaliser une pièce imprimée, dans lequel l'encre comprend un solvant, une résine résorcinol-formaldéhyde, et un épaississant organique ;
L'élimination du solvant de la pièce imprimée ; et
La carbonisation de la pièce imprimée pour réaliser l'aérogel,
Dans lequel la résine résorcinol-formaldéhyde comprend un catalyseur acide et présente un rapport molaire formaldéhyde résorcinol supérieur à 1 :1,
Dans lequel l'épaississant est soluble dans l'eau, est composé uniquement d'atomes C, H et O, et contient uniquement des groupes fonctionnels d'éther ou d'alcool.

**2.** Procédé selon la revendication 1, dans lequel l'encre comprend en outre un agent thixotropique.

**3.** Procédé selon la revendication 2, dans lequel l'agent thixotropique comprend de la silice sublimée et le procédé comprend en outre une gravure HF pour l'élimination de silice de la pièce imprimée.

**4.** Procédé selon l'une quelconque des revendications 1 à 3, dans lequel l'épaississant organique comprend un dérivé de cellulose soluble ou un composé de polyoxyalkylène soluble.

**5.** Procédé selon l'une quelconque des revendications 1 à 4, dans lequel le catalyseur acide comprend de l'acide acétique.

**6.** Procédé selon l'une quelconque des revendications 1 à 5, dans lequel l'encre comprend en outre de l'oxyde de graphène.

**7.** Procédé selon l'une quelconque des revendications 1 à 5, dans lequel l'encre est exempte d'oxyde de graphène.

**8.** Encre d'impression 3D, comprenant :

Un solvant comprenant de l'eau ;
Un épaississant organique ;
Du résorcinol et du formaldéhyde ; et
Un catalyseur acide qui catalyse une réaction entre le résorcinol et le formaldéhyde,
Dans lequel l'épaississant est soluble dans l'eau, est composé uniquement d'atomes C, H et O, et contient uniquement des groupes fonctionnels d'éther ou d'alcool et
Dans lequel l'encre est exempte d'oxyde de graphène.

**9.** Encre selon la revendication 8, comprenant en outre un additif thixotropique, comprenant de préférence de la silice sublimée.

**10.** Encre selon la revendication 8 ou la revendication 9, dans laquelle le catalyseur acide comprend de l'acide acétique.

**11.** Encre selon l'une quelconque des revendications 8 à 10, dans laquelle le rapport molaire résorcinol sur formaldéhyde est inférieur à 1 : 1.

**12.** Encre selon l'une quelconque des revendications 8 à 11, dans laquelle l'épaississant comprend de l'hydroxypropylméthylcellulose ou un composé de polyoxyalkylène.

**13.** Encre selon l'une quelconque des revendications 8 à 12, comprenant de 10 % à 60 % en poids de la résine.

**14.** Supercondensateur comprenant une électrode positive, une électrode négative, et un séparateur disposé entre les électrodes, dans lequel au moins l'un de l'électrode positive, de l'électrode négative, et du séparateur comprend un aérogel de charbon réalisé au moyen d'une encre selon l'une quelconque des revendications 8 à 13 dans lequel l'aérogel de charbon présente une capacitance spécifique supérieure à 200 F/g.

Printing a 3-D Part

100

```
                    ( START )
                        │
                        ▼
      ┌─────────────────────────────────────┐
      │      Prepare 3-D ink suspension      │
      │                 102                  │
      └─────────────────────────────────────┘
                        │
                        ▼
      ┌─────────────────────────────────────┐
      │  Mix ink suspension in mixer for     │
      │   about 1 minute at about 2000rpm    │
      │                 104                  │
      └─────────────────────────────────────┘
                        │
                        ▼
      ┌─────────────────────────────────────┐
      │  Add fumed silica, preferably about  │
      │  8% by weight, to the ink suspension │
      │                 106                  │
      └─────────────────────────────────────┘
                        │
                        ▼
      ┌─────────────────────────────────────┐
      │   Mix further using mixer to produce │
      │      highly viscous thixotropic ink  │
      │                 108                  │
      └─────────────────────────────────────┘
                        │
                        ▼
      ┌─────────────────────────────────────┐
      │  Printing of ink commences (either   │
      │  immediately or within several hours)│
      │                 110                  │
      └─────────────────────────────────────┘
                        │
                        ▼
      ┌─────────────────────────────────────┐
      │  Load ink into syringe barrel and    │
      │  centrifuge for about 1 minute at    │
      │           about 4000rpm              │
      │                 112                  │
      └─────────────────────────────────────┘
                        │
                        ▼
      ┌─────────────────────────────────────┐
      │  Extrude ink through suitable nozzle │
      │  (e.g., micro nozzle) to pattern 3D  │
      │            structures                │
      │                 114                  │
      └─────────────────────────────────────┘
                        │
                        ▼
                    (  END  )
```

FIGURE 1

Post Processing of
Printed 3D Part

START

~200

Place printed parts in container
with iso-octane and seal tight to
avoid evaporation of solvent
202

Place printed parts in oven for
suitable time to allow gelation
204

Remove aqueous solution from
fully gelled sample by soaking
sample in an acetone bath for a
suitable time interval (e.g., 72
hours, changing the solvent every
24 hours)
206

Dry parts in a supercritical dryer
208

FIGURE 2

End

Carbon Activation

```
          ( START )                              ⟋—300

              │
              ▼
┌─────────────────────────────────────┐
│ Heat aerogels in a furnace (e.g., tube furnace) under │
│ nitrogen atmosphere at 1150 degrees C for            │
│ predetermined time (e.g., 3 hours) with desired      │
│ heating and cooling rate (e.g., 2 degrees C/minute)  │
│                  302                                 │
└─────────────────────────────────────┘
              │
              ▼
┌─────────────────────────────────────┐
│ Etch carbonized, 3D printed graphene based           │
│ carbonized aerogels (CAs) with hydrofluoric acid to  │
│ remove fumed silica                                  │
│                  304                                 │
└─────────────────────────────────────┘
              │
              ▼
┌─────────────────────────────────────┐
│ Subject etched parts to extended (e.g., 3 day)       │
│ solvent (e.g., acetone) exchange                     │
│                  306                                 │
└─────────────────────────────────────┘
              │
              ▼
┌─────────────────────────────────────┐
│ Subject etched parts to super critical drying        │
│                  308                                 │
└─────────────────────────────────────┘
              │
              ▼
┌─────────────────────────────────────┐
│ Activate the etched parts by exposing them to an     │
│ oxidizing atmosphere at about 950 degrees C          │
│                  310                                 │
└─────────────────────────────────────┘
              │
              ▼
          (  End  )
```

FIGURE 3

FIGURE 4

FIGURE 5

FIGURE 6

FIGURE 7

FIGURE 8

FIGURE 9a

FIGURE 9b

FIGURE 10a

FIGURE 10b

**FIGURE 10c**

**FIGURE 10d**

EP 3 615 197 B1

## FIGURE 10e

## FIGURE 10f

FIGURE 11a

FIGURE 11b

**(a)**

FIGURE 12a

**(b)**

FIGURE 12b

**(c)**

**FIGURE 12c**

**(d)**

**FIGURE 12d**

FIGURE 12e

FIGURE 12f

FIGURE 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110303880 A1

**Non-patent literature cited in the description**

- High surface area carbon aerogel monoliths with hierarchical porosity. *Journal of Non-Crystalline Solids,* 2008, vol. 354 (29
- *Proceedings of the National Academy of Sciences,* 2014, vol. 111 (7), 3513-3515
- Capacitive desalination with flow-through electrode. *Energy and Environmental Science,* 2012, vol. 5 (11), 9511-9519
- Highly compressible 3D periodic graphene aerogel micro-lattices. *Nature Communications,* 22 April 2015, vol. 6 (6962), 1-8
- **CHENG ZHU et al.** Supercapacitors Based on Three-Dimensional Hierarchical Graphene Aerogels with Periodic Macropores. *NANO LETTERS,* 20 January 2016, vol. 16 (6), ISSN 1530-6984, 3448-3456
- **CHENG ZHU et al.** Supporting Information - Supercapacitors based on 3D hierarchical graphene aerogels with periodic macropores. *NANO LETTERS,* 20 January 2016, vol. 16 (6), ISSN 1530-6984, 1-11
- **BAUMANN et al.** *Journal of Non-Crystalline Solids,* 2008, vol. 354, 3513-3515
- **FANG et al.** *J Appl Electrochem,* 2005, vol. 35, 229-233
- **ZHU et al.** *Nano Letters,* 2016, vol. 16, 3448-3456